# EUROPÄISCHE PATENTSCHRIFT

(11) **EP 0 320 918 B1**
(45) Veröffentlichungstag und Bekanntmachung des Hinweises auf die Patenterteilung: **03.11.1993**
(21) Anmeldenummer: 88120923.3
(22) Anmeldetag: 14.12.1988
(51) Int. Cl.: H04L 27/22, H04B 17/00

(54) **Verfahren zum Empfang nutzsignalmodulierter Trägerschwingungen**
Method for receiving a carrier modulated by an information signal
Procédé pour la réception d'une porteuse modulée par un signal utile

(30) Priorität: 17.12.1987 DE 3742865
(43) Veröffentlichungstag der Anmeldung: 21.06.1989
(73) Patentinhaber: SIEMENS AKTIENGESELLSCHAFT, 80333 München (DE)
(72) Erfinder: Brandl, Hans, Dipl.-Ing., D-8000 München 83 (DE); Unteregger, Burghard, Dipl.-Ing., A-1070 Wien (AT)

(56) Entgegenhaltungen:
- DE-A- 2 752 468
- DE-A- 3 414 969

## Beschreibung

### Technisches Gebiet

Die Erfindung bezieht sich auf ein Verfahren zum Empfang von Signalen in Form von nutzsignalmodulierten Trägerschwingungen, bei dem die verwendete Modulationsart eines ankommenden Signals zunächst mit Hilfe eines Histogramms festgestellt und daraus eine Steuerinformation für die Anpassung der das ursprüngliche Signal zurückgewinnenden Schaltung an die festgestellte Modulationsart herbeigeführt wird.

### Zugrundeliegender Stand der Technik

Beispielsweise durch die Literaturstelle DE-A-34 14 969 ist eine von einem solchen Verfahren Gebrauch machende Funkempfangseinrichtung für Morsesignale oder Fernschreibsignale bekannt, bei der das ankommende Signal zunächst einer Rechenschaltung zugeführt wird, die hieraus ein Histogramm von über der Zeit aufgetragenen Signalhäufigkeiten (Histogramm) erstellt. Dieses erstellte Histogramm wird dann mit in einem Speicher abgespeicherten Musterhistogrammen verglichen und über diesen Vergleich die Modulationsart des empfangenen Signals festgestellt. Im Anschluß an die Feststellung der Modulationsart wird der Diskriminator an diese Modulationsart angepaßt und das empfangene Signal dem Diskriminator zugeführt.

Wie sich gezeigt hat, kommt einem solchen Verfahren nicht nur bei Empfangseinrichtungen für Funksignalüberwachung, sondern auch in Netzen für Informations- und Datenübertragung Bedeutung zu, wenn in einem solchen Netz Sende-Empfangsgerätegruppen vorhanden sind, die unterschiedliche Modemtypen aufweisen. Es können dann immer nur Sende-Empfangsgeräte miteinander in Verbindung treten, die den gleichen Modemtyp aufweisen. Derartige Netze ergeben sich zwangsläufig bei internationaler Zusammenarbeit von Institutionen, deren Sende-Empfangsgeräte hinsichtlich der verwendeten Modulationsart unterschiedlichen CCITT-Vorschlägen genügen.

Besteht für einen bevorrechtigten Teilnehmer in einem solchen Netz die Forderung, im Bedarfsfalle mit jedem der übrigen Teilnehmer des Netzes in Verbindung treten zu können, so wird hierfür ein universelles Sende-Empfangsgerät benötigt, das sich hinsichtlich seines Modems an den Modemtyp der Gegenstation anpassen läßt.

Grundsätzlich besteht natürlich die Möglichkeit, ein solches universelles Sende-Empfangsgerät mit mehreren Modemtypen auszustatten und vor der Signalübertragung beispielsweise durch Absprache den auf der Gegenstation verwendeten Modemtyp im eigenen Empfänger zu aktivieren. Abgesehen davon, daß ein solches universelles Sende-Empfangs-Gerät einen relativ großen technischen Aufwand bedingt, der gerade für den mobilen Einsatz schwerwiegende Nachteile (höheres Gewicht, größeres Volumen, größerer Leistungsbedarf) mit sich bringt, muß ein schneller Verbindungsaufbau auch dann möglich sein, wenn der Modemtyp der sendenden Station dem universellen Sende-Empfangsgerät nicht bekannt ist.

### Offenbarung der Erfindung

Ausgehend von einem Netz, das Sende-Empfangsgerätegruppen aufweist, die sich voneinander durch die verwendete Differenzphasenmodulation (DPSK) voneinander unterscheiden, liegt der Erfindung die Aufgabe zugrunde, für ein an sämtliche im Netz zugelassenen DPSK-Arten ausgelegtes universelles Sende-Empfangsgerät ein Verfahren zum automatischen Anpassen des Modems an die DPSK-Art eines ankommenden Signals anzugeben, das außerordentlich sicher arbeitet und lediglich einen geringen Gerätemehraufwand benötigt.

Diese Aufgabe wird gemäß der Erfindung durch die im Patentanspruch 1 angegebenen Merkmale gelöst.

Der Erfindung liegt die Erkenntnis zugrunde, daß es für die Erkennung der DPSK eines ankommenden Signals sehr vorteilhaft ist, die Wertehäufigkeit auf einen einzigen Quadranten zu beziehen und die hierbei entstehenden Häufungsmaxima auszuwerten, weil diese Maximaauswertung auch bei kleinem Signal-Geräuschverhältnis noch einwandfrei durchgeführt werden kann.

Weiterhin hat sich gezeigt, daß sich der gerätetechnische Mehraufwand hinsichtlich des Modems eines solchen universellen Sende-Empfangsgerätes praktisch in sehr engen Grenzen halten läßt, weil die hier zur Anwendung kommenden DPSK-Arten V22 bis und V26 bis A/B - vergleiche CCITT-Empfehlungen der V-Serie und der X-Serie 5., erweiterte Auflage, Band 1, "Datenübertragung über das Telefonnetz", R.V. Decker's Verlag, G. Schenck, Heidelberg 1985 - für die Empfangsseite des Modems als zusätzlicher Aufwand lediglich ein einstellbares Phasendrehglied und ein Umschalter erforderlich machen

### Kurze Beschreibung der Zeichnung

In der Zeichnung bedeuten die der näheren Erläuterung der Erfindung dienenden Figuren
- Fig. 1: die schematische Darstellung der Sendeseite eines Modems eines Sende-Empfangsgeräte für DPSK,
- Fig. 2: das Prinzipschaltbild einer Codieranordnung für 4 DPSK nach Fig. 1,
- Fig. 3: die schematische Darstellung eines Codierers für 16 DQAM nach Fig. 1,
- Fig. 4: die schematische Darstellung einer vom Verfahren nach der Erfindung Gebrauch machenden Empfangsseite eines Modems eines universellen Sende-Empfangsgerätes,
- Fig. 5: ein nähere Einzeheiten aufweisendes Blockschaltbild des dem Histogrammgenerator vorgeordneten Entscheiders nach Fig. 4,
- Fig. 6: ein nähere Einzelheiten aufweisendes Prinzipschaltbild der Decodieranordnung nach Fig. 4,
- Fig. 7: ein eindimensionales, die DPSK-Art V26 bis A nach CCITT-Empfehlung darstellendes Histogramm,
- Fig. 8: ein eindimensionales, die DPSK-Art V26 bis B nach CCITT-Empfehlung darstellendes Histogramm,
- Fig. 9: ein zweidimensionales, die DPSK-Art V22 bis nach CCITT-Empfehlung darstellendes Hisstogramm.

### Bester Weg zur Ausführung der Erfindung

Wie beispielsweise der Literaturstelle "Der Fernmelde-Ingenieur", Zeitschrift für Ausbildung und Fortbildung, Verlag für Wissenschaft und Leben Georg Heidecker, Bad Windsheim, 38. Jahrgang, Heft 11/12, 1984 zu entnehmen ist, wird zur Übertragung digitaler Nutzsignale in einem eng begrenzten Frequenzband, beispielsweise dem Sprachband, von Differenzphasenmodulation (DPSK) Gebrauch gemacht.

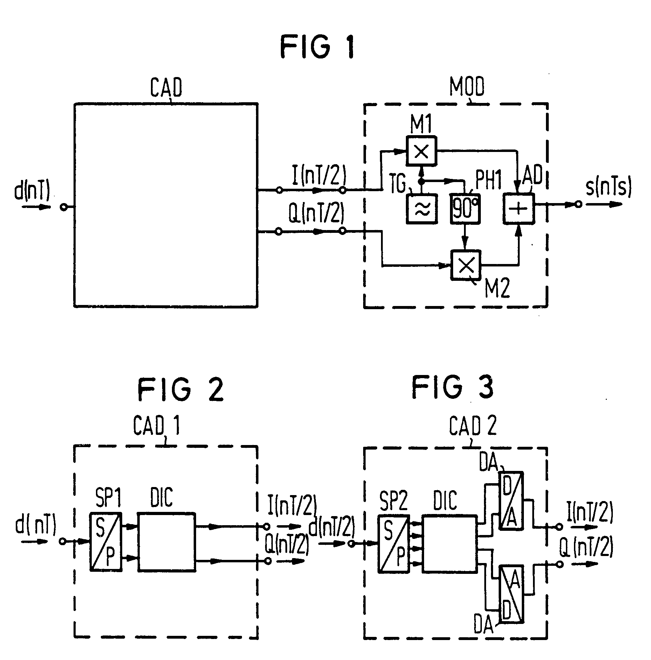

Fig. 1 zeigt in schematischer Darstellung die Sendeseite des Modems eines Sende-Empfangsgerätes. Die digitale Nutzinformation d(nT), beispielsweise mit einer Bitrate von 2400 Bit/sec wird über eine Codieranordnung CAD in ein Signalpaar, nämlich ein In-Phase-Signal I(nT/2) und ein Quadrature-Signal Q(nT/2) mit jeweils 1200 Baud umgesetzt. Dieses Signalpaar wird dem Modulator MOD zugeführt, der eingangsseitig aus zwei Mischern M1 und M2 besteht. Den Mischern M1 und M2 wird am zweiten Eingang die Trägerschwingung von beispielsweise 1800 Hz von einem Trägergenerator TG zugeführt, und zwar dem Mischer M1 unmittelbar und dem Mischer M2 über ein 90°-Phasendrehglied PH1. Die im Mischer M1 durchgeführte Phasenmodulation der Trägerschwingung durch das In-Phase-Signal I(nT/2) einerseits und die im Mischer M2 vom Quadrature-Signal Q(nT/2) phasenmodulierte Trägerschwingung werden über den Addierer AD zum differenzpulsphasenmodulierten abgehenden Signal s(nTs) zusammengefügt und dieses Signal in der Basisbandlage oder aber nach Umsetzung in eine höherfrequente Lage zur fernen Gegenstation übertragen.

Je nach Ausgestaltung der Codiereinrichtung CAD weist das differenzpulsphasenmodulierte abgehende Signal s(nTs) zwei oder mehr verschiedene Phasenlagen auf.

Im vorliegenden Fall sind in den Figuren 2 und 3 lediglich Blockschaltbilder für Codieranordnungen dargestellt, die den praktisch bedeutsamen Fall einer 4 DPSK und einer 16 DQAM ausgelegt sind.

Die für eine 4 DPSK ausgelegte Codieranordnung CAD1 nach Fig. 2 weist eingangsseitig einen Serien-Parallelwandler SP1 auf, der die digitale Nutzinformation d(nT) mit der Bitrate von 2400 Bit/sec in zwei parallele Bitströme mit jeweils 1200 Bit/sec erteilt und dem nachfolgenden Differenzcodierer DIC zuführt. Der Differenzcodierer DIC liefert ausgangsseitig das bereits erwähnte Signalpaar aus dem In-Phase-Signal I(nT/2) und dem Quadrature-Signal Q(nT/2).

Die für eine 16 DQAM bemessene Codiereinrichtung CAD2 weist eingangsseitig ebenfalls einen Serien-Parallelumsetzer SP2 auf, der die eingangsseitige digitale Nutzinformation d(n2T) mit einer Bitrate von 2400 Bit/sec in vier parallele Bitströme mit jeweils 600 Bit/sec aufteilt und entsprechend Fig. 2 dem Differenzcodierer DIC zuführt. Jeweils ein Bitpaar am Ausgang des Differenzcodierers DIC wird einem Digital-Analogwandler DA zugeführt, und der eine Digital-Analogwandler DA ausgangsseitig das In-Phase-Signal I(nT/2) und der andere Digital-Analogwandler DA ausgangsseitig das Quadrature-Signal Q(nT/2) abgibt.

Das Prinzipschaltbild der Empfangsseite des Modems eines universellen Sende-Empfangsgerätes, das von dem Verfahren zur automatischen Anpassung an die DPSK-Art des ankommenden Signals s′(nTs) Gebrauch macht, weist eingangsseitig einen Entzerrer EZ auf, über den hinweg das ankommende Signal einem Demodulator DEM zugeführt wird. Im Demodulator DEM wird aus dem ankommenden Signal s′(nTs) das Signalpaar, bestehend aus dem empfangsseitigen In-Phase-Signal I′(nT/2) und dem empfangsseitigen Quadrature-Signal Q′(nT/2) zurückgewonnen. Hierzu wird das ankommende Signal wiederum dem ersten Eingang eines Mischers M1 und M2 zugeführt. Am zweiten Eingang des Mischers M1 steht wiederum die Trägerschwingung des Taktgenerators TG unmittelbar und am zweiten Eingang des Mischers M2 über ein 90° Phasendrehglied PH1 an. Mischersausgangsseitig werden über Tiefpässe TP die hochfrequenten Anteile unterdrückt und das auf diese Weise zurückgewonnene empfangsseitige Signalpaar der Decodieranordnung DCA eingangsseitig zugeführt.

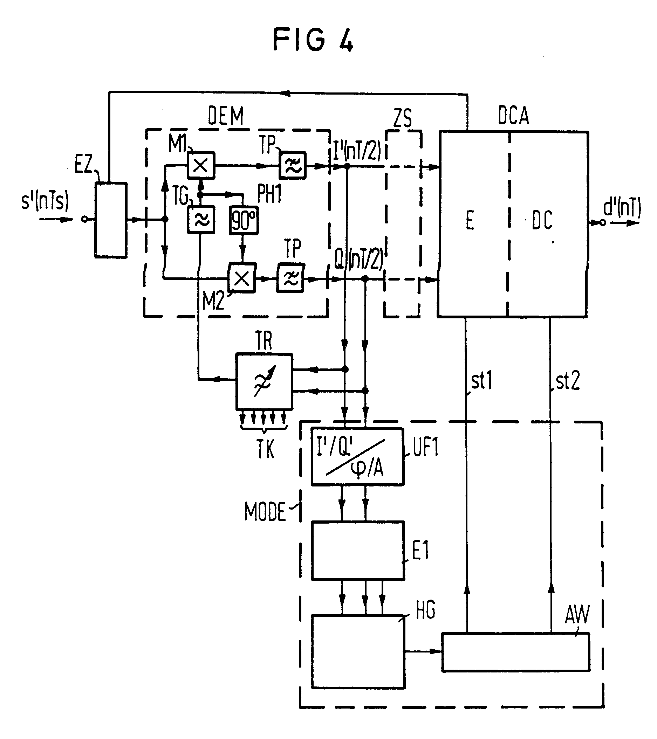

Das empfangsseitige In-Phase-Signal I′(nT/2) und das empfangsseitige Quadrature-Signal Q′(nT/2) am Ausgang des Demodulators werden ferner der Modulationsart-Erkennungsschaltung MODE sowie einer Takt- und Trägerregenerierung TR zugeführt. Die von der Takt- und Trägerregenerierung den verschiedenen Schaltungsteilen zugeführte Takte TK sind lediglich durch abgehende Leitungen in Fig. 4 angedeutet.

Die Modulationsart-Erkennungsschaltung MODE weist eingangsseitig einen Umformer UF1 auf, der das In-Phase-Signal und das Quadrature-Signal in eine Polarkoordinatendarstellung mit dem Phasenwinkel φ und dem Betrag A umrechnet und anschließend die Phasenwinkelinformation und die Betragsinformation dem Entscheider E1 zuführt. Diesem Entscheider E1 folgt der eigentliche Histogrammgenerator HG, der das für die Erkennung der Modulationsart nötige Häufungsdiagramm darstellt und das Ergebnis einem Auswerter AW zur Gewinnung der für die Einstellung der Decodieranordnung DCA nötigen Steuerinformation zuführt.

Die Decodieranordnung DCA selbst besteht aus einem Entscheider E und einem dem Entscheider nachfolgenden Decodierer DC, an dessen Ausgang die übertragene ursprüngliche digitale Nutzinformation d′(nT) bzw. d′(n2T) abgenommen werden kann. Die richtige Einstellung des eingangsseitigen Entzerrers EC erfolgt in Abhängigkeit der Einstellung des Entscheiders E der Decodieranordnung DCA.

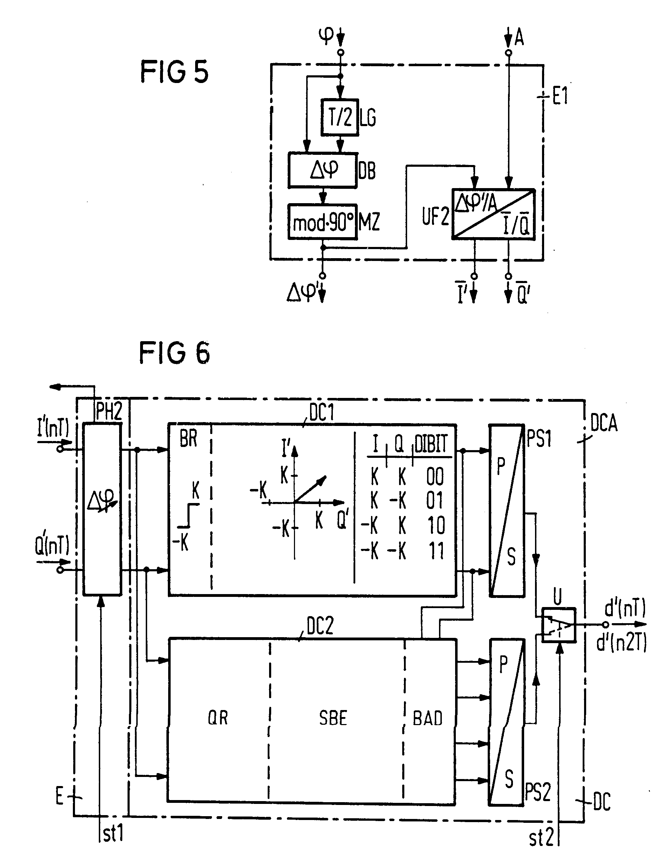

Das nähere Einzelheiten des Entscheides E1 nach Fig. 4 darstellende Blockschaltbild nach Fig. 5 weist einen Differenzwinkelbildner DB auf, dem eingangsseitig die den Phasenwinkel φ betreffende Information am einen Eingang unmittelbar und am andern Eingang über ein Laufzeitglied LG zugeführt wird. Die Laufzeitverzögerung des Laufzeitgliedes LG beträgt dabei eine Taktperiode. Der Differenzphasenwinkel Δφ am Ausgang des Differenzwinkelbildners DB wird über den Multiplizierer MZ hinweg in das Modulo 90° Differenzphasenwinkelsignal umgeformt und dem Histogrammgenerator HG zur Verfügung gestellt.

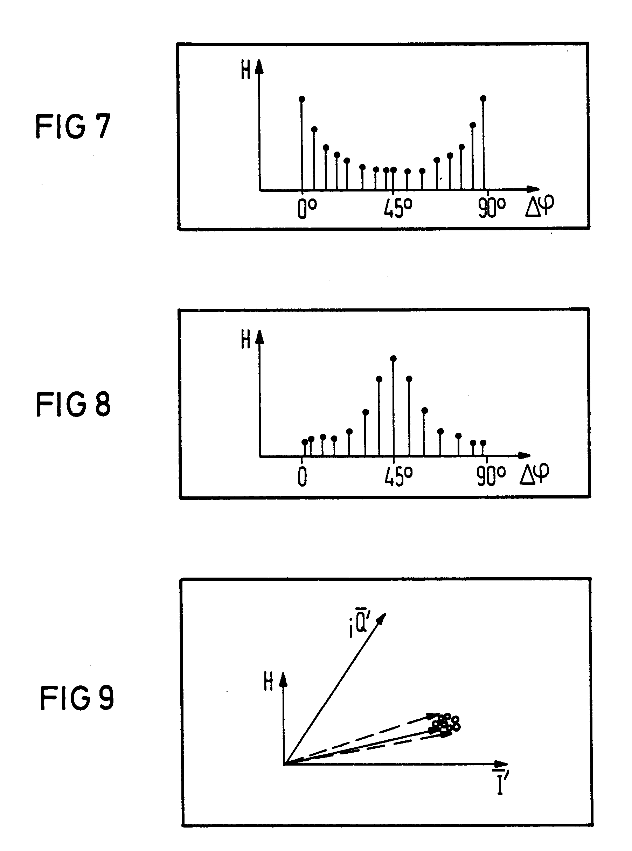

Im Falle einer 4 DPSK V26 bis A/B nach CCITT-Empfehlung genügt dieses Signal dem Histogrammgenerator für die Darstellung der Wertehäufigkeit H über den Differenzphasenwinkel φ im Winkelbereich zwischen 0° und 90°, weil in diesem Falle der Betrag A konstant ist. Von den in den Figuren 7 und 8 dargestellten eindimensionalen Histogrammen zeigt Fig. 7 über dem Differenzphasenwinkel Δφ zwischen 0° und 90° den charakteristischen Verlauf der Wertehäufigkeit H für eine 4 DPSK entsprechend V26 bis A nach CCITT-Empfehlung und Fig. 8 für eine 4 DPSK entsprechend V26 bis B nach CCITT-Empfehlung. Für die Auswertung eines solchen Histogramms ist es erforderlich, den Differenzphasenwinkelbereich zu erkennen, in dem ein Maximum der Häufigkeit auftritt.

Wie das Blockschaltbild nach Fig. 5 erkennen läßt, weist der Entscheider E1 noch einen Umformer UF2 auf, dem eingangsseitig das Modulo 90° -Differenzphasenwinkelsignal Δφ′ und der Betrag A zugeführt werden. Der Umformer UF2 formt diese Signalwerte in Polarkoordinaten wiederum in eine kartesische Koordinatendarstellung um und macht sie ausgangsseitig dem Histogrammgenerator HG nach Fig. 4 als rückgeformtes In-Phase-Signal I̅′ und Quadrature-Signal Q̅′ für den Aufbau eines zweidimensionalen Histogramms verfügbar.

Der Aufbau eines zweidimensionalen Histogramms ist dann erforderlich, wenn, wie das bei 16 DPSK entsprechend V22 bis nach CCITT-Empfehlung der Fall ist, die sendeseitig modulierte Trägerschwingung nicht nur hinsichtlich ihrer Phase sondern auch hinsichtlich ihrer Amplitude von der Nutzsignalinformation moduliert ist. Üblicherweise wird bei Anwendung der 16 DPSK-Modulation zu Beginn der Übertragung ein kurzer Abschnitt in Form ei nes Trainingssignals übertragen, in dem die Trägerschwingung in vier gegeneinander um 90° verschobenen Phasen bei konstanter Amplitude moduliert wird. Das diesbezügliche zweidimensionale Histogramm, bei dem das rückgeformte In-Phase-Signal I̅′ auf der realen Achse und das rückgeformte Quadrature-Signal Q̅′ auf der imaginären Achse aufgetragen ist, zeigt Fig. 9. Es ergibt sich auch hier eindeutig ein Maximum der Wertehäufigkeit H, das für diese Modulationsart typisch ist und für die Einstellung der Decodieranordnung DCA ausgewertet werden kann.

Ein nähere Einzelheiten aufweisendes Blockschaltbild einer Decodieranordnung DCA entsprechend Fig. 4 zeigt noch Fig. 6. Der eingangsseitige Entscheider E besteht hier in einem einstellbaren Phasendrehglied PH2. Dem Steuereingang dieses Phasendrehgliedes wird vom Auswerter AW der Modulationsart-Erkennungsschaltung MODE nach Fig. 4 in Abhängigkeit der erkannten Modulationsart des ankommenden Signals s′(nTs) ein Steuersignal st1 zugeführt. Der Decodierer DC besteht aus dem Decodierer DC1 für den Phasenwinkel und aus dem Decodierer DC2 für die Amplitude. Der Decodierer DC2 wird nicht benötigt, sofern die beim ankommenden Signal verwendete Modulationsart 4 DPSK ist, die keine Amplitudenmodulation der Trägerschwingung aufweist.

Beide Decodierer DC1 und DC2 sind dem Ausgang des Entscheiders E parallel angeschaltet. Ausgangsseitig weist der Decodierer DC1 einen Parallel-Serienwandler PS1 auf, der die einander paralelen Bitströme an den beiden Ausgängen des Decodierers DC1 wiederum zum die übertragene ursprüngliche digitale Nutzinformation d′(nT) darstellenden Signal zusammenfaßt. Das Ausgangssignal des Entscheiders E wird im Decodierer DC1 für die Phase zunächst im Begrenzer BR auf einen konstanten Amplitudenwert ∓ K begrenzt. Der eigentliche Decodierer DC1 für die Phase ist für die Decodierung einer 4 DPSK entsprechend V26 bis B nach CCITT-Empfehlung bemessen und gibt entsprechend der auftretenden Differenzphasen von 45°, 135°, 225° und 315° die entsprechenden Dibits an seinen beiden Ausgängen an den Parallel-Serienwandler PS1 ab. Erkennt die Modulationsart-Erkennungsschaltung MODE beim ankommenden Signal eine 4 DPSK entsprechend V26 bis A nach CCITT-Empfehlung, dann gibt sie an das Phaseneinstellglied PH2 ein Steuersignal st1 ab, das die das Phaseneinstellglied PH2 durchlaufenden Signale, nämlich das In-Phase-Signal I′(nT) und das Quadrature-Signal Q′(nT) um + 45° dreht und damit die Modulationsart V26 bis A in die Modulationsart V26 bis B nach CCITT-Empfehlung für den Decodierer DC1 überführt. Zugleich gibt die Modulationsart-Erkennungsschaltung MODE an den ausgangsseitigen Umschalter U der Decodieranordnung DCA ein Steuersignal st2 ab, das den Umschalter U in die in der Zeichnung dargestellte Schaltstellung überführt.

Der Decodierer DC2 für die Amplitude kommt dann zum Zuge, wenn beim ankommenden Signal nicht nur die Trägerphasen sondern auch die Trägeramplitude moduliert ist, wie das bei der 16 DQAM nach V22 bis entsprechend CCITT-Empfehlung der Fall ist. Der Decodierer DC2 weist eingangsseitig einen Quantisierer QR auf, dem sich ein Subbitentscheider SBE anschließt. Dem Subbitentscheider SBE ist ein Bitaddierer BAD nachgeschaltet, dem außer den beiden, die Amplitudeninformation aufweisenden Subbits auch die die Phaseninformation darstellenden Bits vom Ausgang des Decodierers DC1 zugeführt werden. Die jeweils vier parallelen Bits werden anschließend im Parallel-Serienwandler PS2 in zur übertragenen ausgangsseitigen Nutzinformationen d′(n2T) zusammengefaßt und über den Umschalter U an den Ausgang abgegeben. Hierzu enthält dann der Umschalter U von der Modulationsart-Erkennungsschaltung ein Steuersignal st2, das ihn in die in unterbrochener Linie gezeichnet Schaltstellung überführt.

Um zu vermeiden, daß in dem Zeitinvervall, das die Modulationsart-Erkennungsschaltung MODE benötigt, um die Modulationsart des ankommenden Signals s′(nTs) zu erkennen und die notwendige Anpassung der Decodieranordnung DCA herbeizuführen, einen Inforamtionsverlust zu vermeiden, kann, wie das in Fig. 4 in unterbrochener Linie angegeben ist, im Signalweg zwischen dem Ausgang des Demodulators DEM und dem Eingang der Decodieranordnung DCA ein Zwischenspeicher ZS vorgesehen sein, über den hinweg das empfangsseitige In-Phase-Signal I′(nT/2) und Quadrature-Signal Q′(nT/2) im Sinne einer Überbrückung dieses Zeitintervalls zeitverzögert der Decodieranordnung DCA zugeführt werden.

### Gewerbliche Verwertbarkeit

Das Verfahren nach der Erfindung läßt sich in vorteilhafter Weise bei Sende-Empfangsgeräten für differenzphasenmodulierte Signale da anwenden, wo in Netzen mit von unterschiedlicher Differenzphasenmodulation Gebrauch machenden Sende-Empfangsgerätegruppen für einzelne Teilnehmer die Forderung besteht, durch Verwendung eines universellen Sende-Empfangsgerätes mit jedem Teilnehmer des Netzes in Verbindung treten zu können.

## Patentansprüche

1. Verfahren zum Empfang von Signalen in Form von nutzsignalmodulierten Trägerschwingungen, bei dem die verwendete Modulationsart eines ankommenden Signals zunächst mit Hilfe eines Histogramms festgestellt und daraus eine Steuerinformation für die Anpassung der das ursprüngliche Signal zurückgewinnenden Schaltung an die festgestellte Modulationsart herbeigeführt wird,
**dadurch gekennzeichnet,** daß
das ankommende Signal (s′(nTs)), dessen Trägerschwingung das digitale Nutzsignal (d(nt), d(n2T)) entweder unter Anwendung einer Vier-Phasen-Differenzphasenmodulation (4 DPSK) in zwei möglichen Varianten oder einer Sechzehn-Phasen-Differenzphasenmodulation (16 DQAM) aufmoduliert ist, zunächst demoduliert wird und anschließend das hierdurch zurückgewonnene Signalpaar, nämlich das In-Phase-Signal (I′(nT)) und das Quadrature-Signal (Q′(nT)) einerseits einer Dekodieranordnung (DCA) zugeführt und andererseits nach Umrechnung in eine Phasenwinkel (φ) und Betrag (A) angebende Polarkoordinatendarstellung und Bildung des Differenzphasenwinkels (Δφ) zwischen aufeinander folgenden Werten in einem die Wertehäufigkeit (H) in einem Quadranten anzeigenden Histogramm dargestellt wird und daß die mit Hilfe des Histogramms abgeleitete Steuerinformation in Form eines der Phaseneinstellung dienenden Steuersignals (st1) für den Entscheider (E) und eines Steuersignals (st2) für den Dekodierer (DC) der Dekodieranordnung (DCA) zugeführt wird.

2. Verfahren nach Anspruch 1,
**dadurch gekennzeichnet,** daß
das durch Demodulation aus dem ankommenden Signal (s′(nTs)) zurückgewonnene Signalpaar (I′(nT), Q′(nT)) der Dekodieranordnung (DCA) über einen die Zeit für die Feststellung der Modulationsart und Einstellung der Dekodieranordnung (DCA) überbrückenden Zwischenspeicher (ZS) zugeführt wird.

3. Verfahren nach Anspruch 1 oder 2,
**dadurch gekennzeichnet,** daß
die Darstellung der Wertehäufigkeit (H) der Differenz-Phasenwinkel (Δφ) im Histogramm modulo 90° erfolgt und die Modulationsart an den Differenzphasenwinkelbereichen erkannt wird, in denen Maxima der Wertehäufigkeit auftreten.

4. Verfahren nach einem der vorhergehenden Ansprüche,
**dadurch gekennzeichnet,** daß
zum Erkennen eines ankommenden Signals (s′(nTs) mit 16 DQAM der zu Beginn kurzzeitig im sogenannten "Trainingsmode" mit lediglich einem bestimmten Wertepaar aus Differenzphasenwinkel (Δφ) und Betrag (A) pro Quadrant für die Darstellung eines zweidimensionalen auf einen Quadranten bezogenen Histogramms ausgewertet wird.

## Claims

1. Method for receiving signals in the form of carrier oscillations modulated by a useful signal, in which the type of modulation of an incoming signal that is used is firstly determined with the aid of a histogram, and from this control information is derived for matching the circuit which recovers the original signal to the type of modulation determined, characterised in that the incoming signal (s'(nTs)), onto whose carrier oscillation the digital useful signal (d(nt), d(n2T)) is modulated either by using a four-phase differential phase modulation (4 DPSK) into two possible variants or a sixteen-phase differential phase modulation (16 DQAM), is firstly demodulated and subsequently the signal pair thereby recovered, specifically the in-phase signal (I'(nT)) and the quadrature signal (Q'(nT)), is, on the one hand, added to a decoder arrangement (DCA) and is, on the other hand, after conversion into a polar coordinate representation specifying a phase angle (φ) and absolute value (A) and formation of the differential phase angle (Δφ) between successively following values, represented in a histogram displaying the value frequency (H) in a quadrant, and in that the control information derived with the aid of the histogram is fed to the decoder arrangement (DCA) in the form of a control signal (st1), which serves for phase adjustment, for the decision circuit (E) and of a control signal (st2) for the decoder (DC).

2. Method according to Claim 1, characterised in that the signal pair (I'(nT)), Q'(nT)) recovered from the incoming signal (s'(nTs)) by means of demodulation is fed to the decoder arrangement (DCA) via a buffer (ZS) which bridges the time for determining the type of modulation and adjusting the decoder arrangement (DCA).

3. Method according to Claim 1 or 2, characterised in that the representation of the value frequency (H) of the differential phase angle (Δφ) is performed modulo 90° in the histogram, and the type of modulation is identified from the differential phase angle ranges in which maxima of the value frequency occur.

4. Method according to one of the preceding claims, characterised in that for the purpose of identifying an incoming signal (s'(nTs) by means of 16 DQAM, the carrier is briefly evaluated at the beginning in the so-called training mode with only a specific value pair of differential phase angle (Δφ) and absolute value (A) per quadrant for the representation of a two-dimensional histogram relative to one quadrant.

## Revendications

1. Procédé de réception de signaux sous la forme de porteuses modulées par le signal utile, dans lequel le type de la modulation utilisée d'un signal d'entrée est tout d'abord déterminé à l'aide d'un histogramme, et de cela il découle une information de commande pour l'adaptation du circuit de récupération du signal d'origine, au type déterminé de la modulation,
caractérisé en ce que le signal d'entrée (s'(nTs)), dont la porteuse est modulée par le signal numérique utile (d(nt), d(n2T)), soit par l'utilisation, dans deux variantes possibles, d'une modulation différentielle de phase à quatre phases (4 DPSK), soit par l'utilisation d'une modulation différentielle de phase à seize phases (16 DQAM), est tout d'abord démodulé et ensuite le couple de signaux ainsi obtenu, à savoir le signal en phase (I'(nT)) et le signal en quadrature (Q'(nT)), d'une part, est envoyé à un dispositif de décodage (DCA) et, d'autre part, est représenté, après conversion en une représentation en coordonnées polaires donnant la phase (φ) et le module (A) et après formation de la différence de phase (Δ φ) entre des valeurs successives, dans un histogramme indiquant, dans un quadrant, la fréquence des valeurs (H), et que l'information de commande obtenue à l'aide de l'histogramme est envoyée au dispositif de décodage (DCA), sous la forme d'un signal de commande (st1), servant au réglage de phase, pour le dispositif de décision (E), et d'un signal de commande (st2) pour le décodeur (DC).

2. Procédé suivant la revendication 1,
caractérisé en ce que le couple de signaux (I'(nt), Q'(nT)), récupéré par démodulation à partir du signal d'entrée (s'(nTs)), est envoyé au dispositif de décodage (DCA) et par l'intermédiaire d'une mémoire temporaire (ZS), pendant une durée au moins égale au temps de détermination du type de la modulation et au temps de réglage du dispositif de décodage (DCA).

3. Procédé suivant la revendication 1 ou 2,
caractérisé en ce que la représentation de la fréquence des valeurs (H) de la différence phase (Δ φ) dans l'histogramme s'effectue modulo 90° et le type de la modulation est reconnu dans la zone de la différence de phase dans laquelle apparaît le maxima de la fréquence des valeurs.

4. Procédé suivant l'une des revendications précédentes,
caractérisé en ce que, pour reconnaître un signal d'entrée (s'(nTs)) à l'aide de la modulation 16 DQAM, on procède, au début, à une évaluation temporaire suivant ce que l'on désigne par "Trainingsmode" ("mode de conditionnement"), avec uniquement un couple de valeur déterminé et constitué de la différence de phase (Δ φ) et du module (A), par quadrant et pour la représentation d'un histogramme en deux dimensions rapporté à un quadrant.
